Europäisches Patentamt

European Patent Office

Office européen des brevets

(19)

(11) Publication number: **0 284 415**
**A1**

## (12) EUROPEAN PATENT APPLICATION

(21) Application number: 88302672.6

(22) Date of filing: 25.03.88

(51) Int. Cl.⁴: **H 05 B 39/00**

(30) Priority: 26.03.87 US 30702

(43) Date of publication of application:
28.09.88 Bulletin 88/39

(84) Designated Contracting States: **DE FR GB IT SE**

(71) Applicant: **Ke, Jenn-Yuh**
**No. 5-1, Alley 17, Lane 52 Chung Shan 2nd Road**
**Luchen Hsiang Taipei (TW)**

**Hunag, Bin-Win**
**12 Fl. No. 47 Chin Hwa Street**
**Taipei (TW)**

(72) Inventor: **Ke, Jenn-Yuh**
**No. 5-1, Alley 17, Lane 52 Chung Shan 2nd Road**
**Luchen Hsiang Taipei (TW)**

**Hunag, Bin-Win**
**12 Fl. No. 47 Chin Hwa Street**
**Taipei (TW)**

(74) Representative: **Crawford, Andrew Birkby et al**
**A.A. THORNTON & CO. Northumberland House 303-306**
**High Holborn**
**London WC1V 7LE (GB)**

(54) Headlight on/off control gadget.

(57) This invention relates to a controllable gadget for vehicle head light. A frequency distinguishing circuit is connected with a battery to get power supply and connected with the distributor to get the pulse of engine ignition. The input pulse frequency is compared with the fixed frequency value. When the input frequency is higher than the fixed value's upper limit, it will generate an output signal to operate the driven circuit so as to turn the headlight on. On the other hand, when the input frequency is lower than the fixed value's lower limit, the frequency distinguishing circuit outputs no signal, however, an additional delay circuit can continue to activate the driven circuit for a short period in the wake of without input signal. Further, a pulse rectifying circuit and a voltage stabilizing circuit are attached near the input terminal of the frequency distinguishing circuit so as to further stablize the control condition of the gadget.

EP 0 284 415 A1

**Description**

HEADLIGHT ON/OFF CONTROL GADGET

This invention relates to a controllable gadget for vehicle head light.

Mobile vehicles have to be turned off the headlight for a moment while parking, especially an automobile, so as to maintain the normal function of the battery. In a raining day or air condition supply while stopping, the power of the battery is consumed very quickly, furthermore, the vehicle engine is running at the lowest rpm the electric power generated from the generator is relatively less in volume; if the headlight doesn't be turned off at that moment, the power of the battery will inevitably be consumed and cause its storage volume to become less and less. Thus, a good driver surely will turn off the headlight in the interim of parking and turn on it again until he is ready to move ahead. However, it will be tiresome and inconvenient for a driver to turn on or off the headlight manually every time while stopping vehicle, especially in an urban district which is often congested with traffic.

For correcting the above-said shortcoming, a circuit device for control headlight have been designed to utilize the travelling automobile to drive a mechanical magnet revolving apparatys and shift the magnetic field so as to control the headlight. Such device not only requires to convert the original transmission shaft but also revolve the shaft around a complete revolution until the magnetic field is shifted then turn on the headlight. If it applies emergency brake, the headlight will immediately be off. It is an adverse threat to the driver's safety, especially, while driving on a road of poor condition in the dark night, the driver suddenly brake or start an automobile usually cause the headlight cann't keep on illuminlating.

Up to the present, there still isn't any satisfied device which can control the headlight automatically light up and out, guarantee driver's safety, and without trouble driver to install the device.

The primary purpose of this invention is to provide a kind of circuit device which is easy for installation and able to automatically control vehicle's headlight to be on or off without costing safety while travellilng.

Another purpose of this invention is to provide a kind of circuit device that is easy to be installed and enable the headlight to be on before travelling or off after the vehicle stopping.

One more purpose of this invention is to provide a kind of circuit device that is easy to be installed can automatically control the headlight to be on or off together with a manual switch which under special condition enable the headlight to be on or off continuously.

One additional purpose of this invention is to provide a kind of circuit device, that is easy to be installed, can automatically control vehicle's headlight to be on or off together with a device that is able to swiftly adjust the frequency distinguishing value.

For achieving the above-said purposes, the invention has provided a kind of circuit device with a frequency distinguishing circuit so as to detect the pulse which is transmitted from the distributor and has been rectified firstly through the pulse rectifying circuit. When the pulse frequency value exceeds the upper limit of the oscillator's fixed value, the circuit will output a signal to activate the driven circuit so as to illuminate the headlight. On the country, detection frequency value is lower than the lower limit value of the fixed value though without signal output, there is a delay circuit which still can continue activating the driven circuit for a while and then stop to turn off the headlight. There is a status indicating circuit, not through the delay circuit, directly connected with the frequency distinguishing circuit not to be interfered by delayed time, easily and swiftly adjust the set standard oscillation frequency value in the frequency distinguishing circuit. When vehicle starts, it must accelerate to consume gasoline to increase ignition frequency in the distributor. As the frequency exceeds the upper limit of the standard oscillation frequency in the frequency distinguishing circuit, the headlight will turn on automatically and once the vehicle stops, the ignition frequency in the distributor declines and there will be no signal output from the frequency distinguishing circuit, the delay circuit can continue activating the driven circuit for a while before completing stop it. Of the above-said device, there is a voltage stabilizing circuit to further stabilize the voltage which input frequency distinguishing circuit so as to maintain distinguishing work not to be interfered. Moreover, there is a manual switch can control the headlight to be on or off under a special condition by way of a selective switch on the conventional vehicle and needn't go through the above-said device.

This invention is a kind of gadget to control vehicle's headlight on or off by means of comparing the detecting frequency value of the distributor's engine ignition and the fixed standard pulse frequency of the circuit.

Fig. 1 is a block diagram of this invention.

Fig. 2 is a block diagram of frequency distinguishing circuit.

Fig. 3 is an operation of the block diagram shown in the Fig. 2.

Fig. 4 is another block diagram of the frequency distinguishing circuit.

Fig. 5 is an illustration of action shown in the Fig. 4.

Fig. 6 is a circuit diagram of this device and application of circuit shown in the Fig. 2.

Fig. 7 is a part of circuit diagram shown in the Fig. 3.

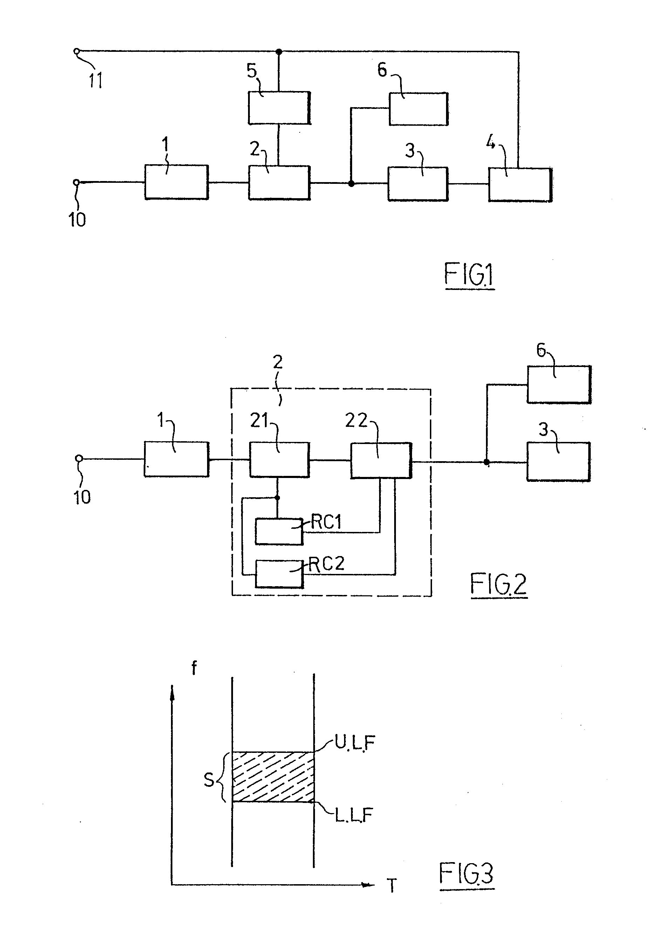

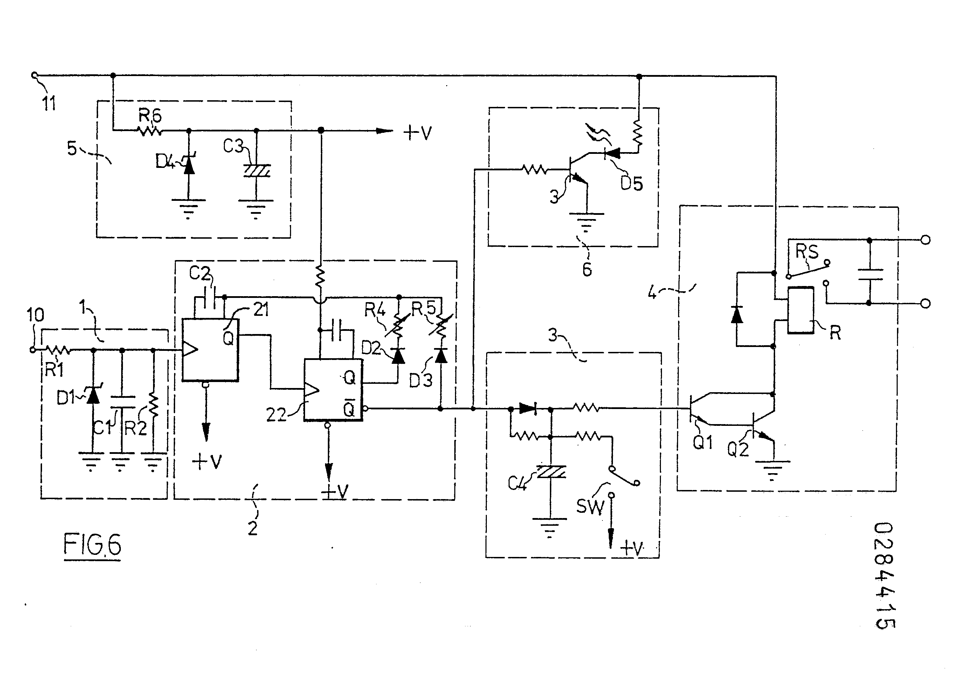

In Fig. 1 this invention has a frequency distinguishing circuit 2 with an input terminal 10 to connect with the circuit of vehicle's distributor and another input terminal 11 to connect with the battery for getting power. The output terminal of frequency distinguishing circuit 2 is connected with a driven circuit 4 to control the power supply for headlight. A voltage stabilizing circuit 5 can be connected in the middle portion of the power supply input terminal 11 for stabilizing the frequency distinguishing circuit in the detecting work, further connected a pulse rectifying circuit 1 in the middle portion of the frequency input terminal 10 to rectify the ignition pulse frequency firstly input from the distributor. In order to keep the headlight on for a while as the vehicle parking, a delay circuit 3 is installed in the middle portion of the frequency distinguishing circuit 2 and the driven circuit 4 so that the delay circuit 3 enable the driven circuit 4 to keep activating in appropriate short time when the frequency distinguishing circuit 2 ceased to output signal.

A status indicating, directly connected with the frequency distinguishing circuit 2, has an indicating light is able to simulate the lighting up or out of a vehicle head lamp showing from its display so that an adjustment work for the device is nonnecessary to prosecute in dark night to look the head light as usual. Moreover, the output signal from frequency distinguishing circuit 2 can also be shown directly by the status indicating circuit 6 and requires not to go through the delay circuit 3 for save time in adjustment.

A pulse rectifying circuit 1 of the foregoing, a typical design example is constituted by a resistor R2 and a capacitor C1 (per Fig. 6) to dispose of the miscellaneous signals that sent in from the input terminal 10. Further, a diode D1 can prevent other circuit components from ruin by any excessive voltage sudden input, and a resistor R1 can lower the potential in this circuit to maintain normal state and to specify the pulse output from this circuit.

The frequency distinguishing circuit 2 has at least two preferred designs, the first one as shown in the Figs 2, 3, and 6 can form an oscillation frequency standard value S (per Fig. 3). Most automobile standard value is between 550 to 620. The standard value S has an ultra limit frequency (U. L. F.) and a low limit frequency ( L. L. F.). Only when the detecting frequency value, i.e., the oscillation frequency of oscillator in circuit is higher than the U. L. F., the signal can be output and once transmitting the signal, the circuit won't stop outputting the signal until the input frequency is lower than the L. L. F. of the standard value S. Therefore, the sector of frequency standard value S enable the detecting work effectively to prevent the output of normal signal from being interferred by the input pulse frequency which cann't keep a fixed value continuously. There are two monostable oscillators 21 and 22, each of them has at least one input terminal and one output terminal, each maintains two different steady status. When power is transmitted in from the input terminal 11, and engine is not ignited, the input terminal of the second oscillator 22 has no signal to input, the output terminal Q is of high potential which leads a current to connect with the first oscillator 21 through diode D3 and the first circuit RC1 which formed by a resistor R and a capacitor C to gradually charge toward two terminals of the capacitor C2. The first RC delay circuit is rendered a frequency value by a resistor R5 and a capacitor C2. This value will be considered as the L. L. F. of the frequency standard value S of this circuit install ation. Besides, the output terminal Q2 of the second oscillator 22 is connected with the diode D2 and the convertible capacitor R4 (per Fig. 6). The resistor value of the convertible resistor R4 is smaller than that of the above-said convertible resistor's. Another RC delay circuit RC2 which is rendered by a resistor R4 and a capacitor C2 forms another frequency value which will be regarded as the U. F. F. of the frequency standard value S. The above-said resistors R4 and R5 in typical are applied the convertible resistor. When engine is ignited, the pulse gets in from the first oscillator 21 input terminal and the output terminal Q will turn to high potential from the low potential and output a pulse to touch off the second oscillator 22 and change the mutual complement potential of the second oscillator's output terminal i.e. to make the output terminal Q output a high potential and charge the capacitor C2 through the second RC delay circuit RC2 so that the output terminal Q will no longer send out signal and the driven circuit 4 is unable to activate. Thus, when engine is idle, the headlight will turn off automatically. If the pulse circle of the second oscillator's output terminal Q which is transmitted into the first oscillator 21 is shorter than that of engine ignition's, the first oscillator 21 will, therefore, can continually output the pulse which input from the input terminal to the second oscillator 22 through the output terminal Q and then from the output terminal Q of the second oscillator 22 to send back the pulse to the first oscillator 21 and take turns. When vehicle accelerates, the engine rpm will raise up and the pulse frequency which is sent to the first oscillator 21 will increase and the circle time will shorten. When the circle time is shorter than that of the capacitor's continuous discharge oscillation in the first oscillator 21, the output terminal Q of the first oscillator 21 will turn to low potential and no longer to send out the pulse, so that have the two output terminals of the second oscillator 22 change their potential and become the output terminal 22 to high potential so as to output the signal to the driven circuit 4 and make the relay of the driven circuit 4 to close up and the headlight will turn on.

When parking, if the engine ignition frequency is lower than the oscillation frequency of the first oscillator 21, the potential at the output terminal of hte first oscillator 21 will again be converted and does not to send out the pulse to the second oscillator 22. Thus, the potential at the two output terminals of the second oscillator 22 will again convert and output terminal Q will no longer send out signal so as to turn off the headlight.

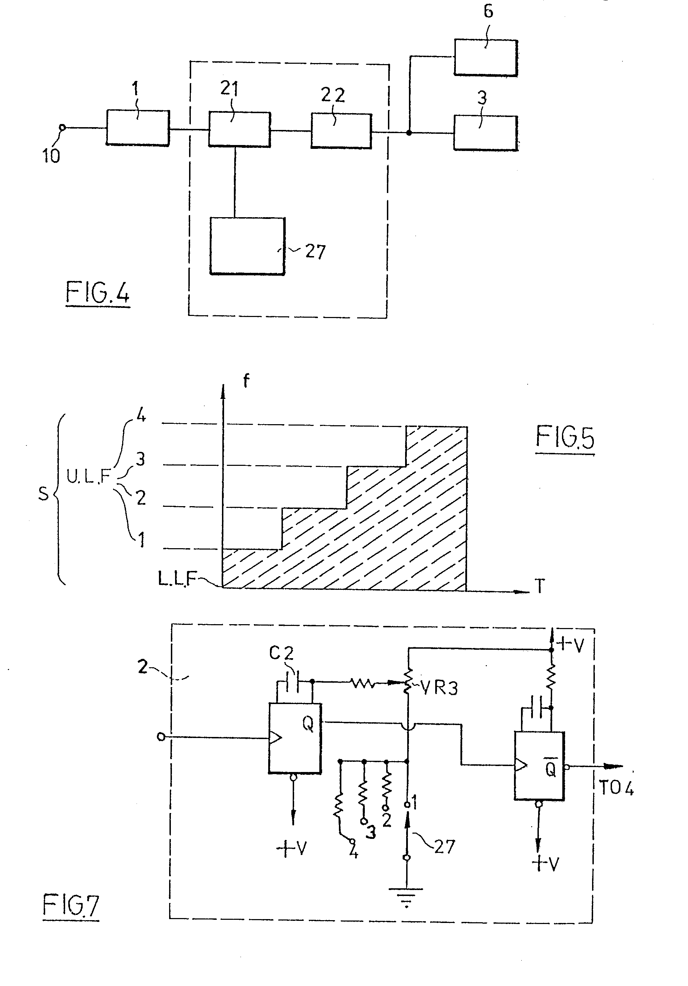

The design of another frequency distinguishing circuit 2 may be referred to the Figs. 4, 5, and 7. The main difference of this circuit from the circuit as shows in Fig. 6 is that at the first oscillator output which con nects with a convertible digit delay circuit and then connect with the second oscillator 22. Of the convertible digit delay circuit to set the L. L. F. of frequency standard value S from a convertible resistor VR3 and then make it to series a multi-resistors multi-selective switch 27 and relying on various resistor value of the selective switch 27 to adjust the sector of frequency standard value S and to set the U. L. F. as shows in Fig. 5. Such kind of design can make the adjustment work for frequency standard value S to be easy and convenient. The power input terminal of the above-said frequency distinguishing circuit 2 (per Fig. 6) connects with a voltage stabilizing diode D4, capacitor C3 and resistor R6 to commonly from voltage stabilizing circuit device 5 to further stabilize the input voltage.

The output terminal Q of the second oscillator 22 in the frequency distinguishing circuit 2 connects with a status indicating circuit 6. When this output terminal Q is of high potential, and voltage flows is amplified by the transistor Q3, it will make indicating light D5 to turn on. A typical indicating light D5 is of emitter diode so that from the light up or out of the indicating light, we can realize whether the signal has transmitted to the driven circuit 4 or not. After the signal is transmitted to the driven circuit 4, it will firstly be amplified by the transistor Q1 and Q2 so as to make relay R generate magnitic and to close the headlight switch RS.

A delay circuit 3 is installed between the driven circuit 4 and the frequency distinguishing circuit 2. In the delay circuit there is a capacitor C4, when it is charged and the frequency distinguishing circuit 2 has not current to be transmitted to the driven circuit 4, the capacitor C4 can still discharge toward the driven circuit 4 within a short time to make the headlight not to turn off immediately once the vehicle parking. There is a selective switch SW1 enable the above-said circuit to connect with the positive connecting point 11 of the battery and directly obtain the power source so as to light up the headlight. Thus, the headlight can keep turning on under a special condition.

In accordance with the above-said explanation of circuit, it reveals that this invention has provided a relatively feasible design to control the light up or out of the while vehicle travelling. Besides, because it is convenient to install and practicable for various mobile vehicles to assemble while manufacturing, or additionally install it to the vehicle under using, it can effectively facilitate the automobile drivers.

**Claims**

1. A vehicle headlight on/off control gadget comprises: a frequency distinguishing circuit has two monostable oscillators, each of them has at least an input terminal and an output terminal and each of them maintains stable status; two output terminals of the second oscillator separately connected with a R-C delay circuit which is different digit value from each other, and then connected with the first oscillator; said second oscillator has an input terminal and is connected with the output terminal of said first oscillator; said first oscillator has an input terminal is connected with vehicle's distributor; the ignition pulse frequency which is input from said distributor is compared with the oscillation frequency of the first oscillator's terminal so as to generate pulse in the output terminal and said pulse to convert the potential which is separately in each output terminal of said second oscillator; one of them which is connected with a R-C delay circuit having less digit value can output a signal to operate the driven circuit so as to illuminate a vehicle head lamp.

2. A vehicle headlight on/off control gadget comprises: a frequency distinguishing circuit has two monostable oscillators, each of them has at least an input terminal and an output terminal and each of them maintains stable status; a convertible digit R-C delay circuit is connected with the output terminal of the first oscillator and an input terminal of the second oscillator is connected with the former output terminal; a distributor is connected with the input terminal of said first oscillator, its ignition pulse frequency is compared with the oscillator frequency of said first oscillator's input terminal so as to generate a pulse from the output terminal of said first oscillator and to convert the potential of said second oscillator's output terminal, as the output terminal of said second oscillator obtains high potential, it can output a signal to operate the driven circuit.

3. A headlight control gadget according to claim 2 wherein said convertible digit R-C delay circuit is comprise of a convertible resistor, a multi-resistors selective switch, and a capacitor.

4. A headlight control gadget according to claim 1 and 2 wherein a status indicating circuit is connected with the output terminal of said second oscillator; an indicating light of said indicating circuit will be turned on as said output terminal obtains high potential.

5. A headlight control gadget according to claims 1 and 2 wherein a pulse rectifying circuit is connected between the distributor and the input terminal of said first oscillator.

6. A headlight control gadget according to claims 1 and 2 wherein a delay circuit is connected between said frequency distinguishing circuit and said driven circuit so as to discharge and delay said driven circuit for a short period as the output terminal of said frequency distinguishing circuit outputs no signal.

7. A headlight control gadget according to claims 1 and 2 wherein a selective switch enables the power supply directly transmit to the driven circuit.

8. A headlight control gadget substantially as hereinbefore described, and as illustrated in the accompanying drawings.

0284415

FIG.1

FIG.2

FIG.3

FIG.6

0284415

0284415

FIG.4

FIG.5

FIG.7

# EUROPEAN SEARCH REPORT

**European Patent Office**

Application number

EP 88302672.6

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE - A - 2 358 073 (KO AN INC.) <br> * Fig. 1; claims 1-6 * | 1 | H 05 B 39/00 |
| P,A | US - A - 4 665 321 (CHANG) <br> * Abstract; fig. 1,4 * | 1 | |
| A | US - A - 4 357 558 (MASSONI) <br> * Abstract; fig. 1 * | 1 | |

TECHNICAL FIELDS SEARCHED (Int Cl 4)

H 05 B 39/00
B 60 Q 1/00

The present search report has been drawn up for all claims

| Place of search | Date of completion of the search | Examiner |
|---|---|---|
| VIENNA | 14-06-1988 | VAKIL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82